(19)

Europäisches
Patentamt
European
Patent Office
Office européen
des brevets

(11) **EP 2 498 465 A2**

(12) **EUROPEAN PATENT APPLICATION**
published in accordance with Art. 153(4) EPC

(43) Date of publication:
**12.09.2012 Bulletin 2012/37**

(21) Application number: **10827170.1**

(22) Date of filing: **02.11.2010**

(51) Int Cl.:
***H04L 27/26*** *(2006.01)*

(86) International application number:
**PCT/KR2010/007641**

(87) International publication number:
**WO 2011/053086 (05.05.2011 Gazette 2011/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2009 KR 20090105184**

(71) Applicant: **Pantech Co., Ltd.**
**Seoul 121-270 (KR)**

(72) Inventors:
• **PARK, Kyoungmin**
**Goyang-si**
**Gyeonggi-do 411-440 (KR)**

• **LI, Jianjun**
**Seoul 121-270 (KR)**
• **SUH, Sungjin**
**Seoul 137-070 (KR)**

(74) Representative: **Herzog, Markus et al**
**Weickmann & Weickmann**
**Patentanwälte**
**Postfach 86 08 20**
**81635 München (DE)**

(54) **METHOD FOR MAPPING AND TRANSMITTING DEMODULATION REFERENCE SIGNAL (DM-RS), COMMUNICATION TERMINAL DEVICE USING SAME, APPARATUS FOR TRANSMITTING DM-RS, AND METHOD FOR RECEIVING DM-RS**

(57) The present invention relates to a method for mapping and transmitting demodulation reference signal (DM-RS) and a communication terminal device, and more particularly to a method for mapping and transmitting DM-RS which uniformly maintains reception reliability of DM-RS for each layer in a process for transmitting different DM-RSs for odd-numbered layers.

FIG.7

## Description

Technical Field

The present invention relates to a wireless communication system, and more particularly to a method of mapping or transmitting a Demodulation Reference Signal (hereinafter, referred to as a "DM-RS") used for informing a reception side of a structure of a precoder by a transmission side in a wireless communication system transmitting and receiving information through a Multiple Input Multiple Output (MIMO) antenna, and a communication terminal apparatus using the same.

Background Art

With the development of a communication system, consumers such as enterprises and individuals have used highly various wireless terminals.

In current mobile communication systems such as 3GPP, LTE (Long Term Evolution), LTE-A (LTE Advanced), and the like, it is required to develop a technology, which can transmit high capacity data, equivalent to a wired communication network as a high speed and capacity communication system, which can transmit and receive various data such as image, radio data, etc. beyond services mainly for voice. Further, it is necessary for such a technology to have a proper error detecting method, which can minimize an information loss and increase a system efficiency thereby improving a system capability.

In such a communication system, a transmitting apparatus uses a reference signal called a DM-RS in order to inform a receiving apparatus of information on a precoder used for transmitting information to a receiving apparatus.

Meanwhile, both the transmission side and the reception side use the communication system adopting the MIMO antenna, and different DM-RSs should be transmitted in every layer through which a User Equipment (UE) receives or transmits a signal.

The discussion on a process of mapping different DM-RSs into transport blocks or resource blocks in every layer is in progress, but a definite standard is not still derived.

Detailed Description of the Invention

Technical Problem

An aspect of the present invention is to provide a method of mapping DM-RSs for multiple layers into resource blocks or transport blocks and then transmitting the DM-RSs.

An aspect of the present invention is to provide a method of mapping or transmitting a DM-RS, which enables DM-RSs for respective layers to have the equal reception reliability.

An aspect of the present invention is to provide a method of mapping or transmitting a DM-RS, which enables DM-RSs for an odd number of layers to have the equal reception reliability, and a communication terminal apparatus using the same.

Technical solution

In accordance with an aspect of the present invention, there is provided a method of mapping a Demodulation Reference Signal (DM-RS), the method including alternately allocating singly allocated layers in every non-interference RE group, wherein one RE group including four Resource Elements (REs) comprises a non-interference RE group in which DM-RSs of two layers are overlappingly allocated to each of two REs and a DM-RS of one remaining layer is singly allocated to each of two remaining REs.

According to another aspect of the present invention, there is provided a method of mapping a Demodulation Reference Signal (DM-RS), the method including alternately allocating layers allocated to all four REs in every overlapping RE group, wherein RE groups include one or more overlapping RE groups in which a DM-RS of an equal layer is allocated to each of all four REs included in the RE group, each of the RE groups including four REs, each of the four REs being overlappingly allocated DM-RSs of two layers.

According to another aspect of the present invention, there is provided a method of transmitting DM-RSs for an odd number of layers, the method including mapping DM-RSs of respective layers into REs of one or more RBs and then transmitting the mapped DM-RSs so that the DM-RSs of the respective layers have equal reception reliability.

According to another aspect of the present invention, there is provided a communication terminal apparatus for receiving DM-RSs for an odd number of layers, the communication terminal apparatus receiving DM-RSs of an odd number of layers generated by mapping a DM-RS of each layer into REs of one or more RBs in order to allow DM-RSs of respective layers to have equal reception reliability and acquiring information on precoders used in the respective layers.

According to another aspect of the present invention, there is provided an apparatus for transmitting DM-RSs for an odd number of layers, the apparatus mapping DM-RSs for respective layers into REs of one or more RBs and then transmitting the mapped DM-RSs so that the DM-RSs of the respective layers have equal reception reliability.

According to another aspect of the present invention, there is provided a method of receiving DM-RSs of an odd number of layers by a communication terminal apparatus, the method including receiving DM-RSs of an odd number of layers generated by mapping DM-RSs of respective layers into REs of one or more RBs so that the DM-RSs of the respective layers have equal reception reliability, by the communication terminal apparatus; and acquiring information on precoders used in the respective layers.

Brief Description of the Drawings

FIG. 1 schematically illustrates a wireless communication system to which an embodiment of the present invention is applied.

FIGs. 2A to 2C illustrate structures of a general subframe and time slot of a transmission data which can be applied to embodiments of the present invention.

FIG. 3 illustrates an example of transmitting a signal in a Multiple User-Multiple Input Multiple Output (MU-MIMO) where there are 3 UEs.

FIGs. 4 to 6 illustrate embodiments of the DM-RS mapping in a rank 2 transmission to a rank 4 transmission.

FIGs. 7 to 8 illustrate embodiments of the DM-RS mapping or the DM-RS patterning which allows DM-RSs for respective layers to have the same reception reliability in a rank 3 transmission.

FIGs. 9 to 13 illustrate embodiments of the DM-RS mapping or the DM-RS patterning which allows DM-RSs for respective layers to have the same reception reliability in a rank 5 transmission.

FIGs. 14 and 15 illustrate a DR-RS mapping method according to another embodiment of the present invention.

Best Mode for Carrying out the Invention

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, a third component may be "connected," "coupled," and "joined" between the first and second components, although the first component may be directly connected, coupled or joined to the second component.

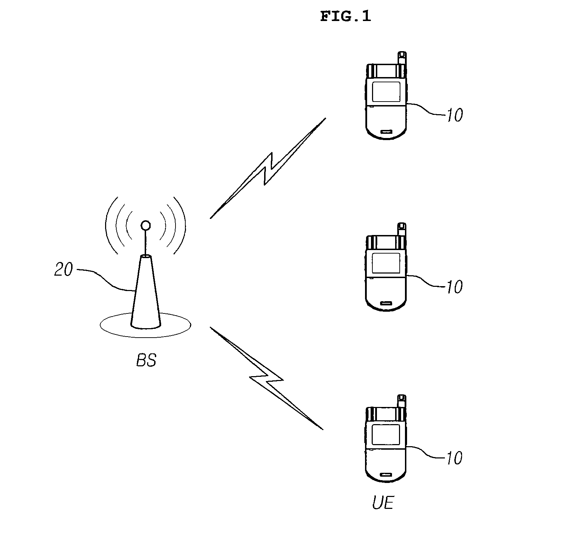

FIG. 1 illustrates a wireless communication system to which embodiments of the present invention are applied.

The wireless communication system is widely arranged to provide various communication services such as voice, packet data, etc.

Referring to FIG. 1, the wireless communication system includes a User Equipment (UE) 10 and a Base Station (BS) 20. The UE 10 and the BS 20 use a DM-RS mapping method which will be described in the following embodiment.

The UE 10 in this specification is a generic concept indicating a user terminal in wireless communication, and should be interpreted as a concept including all of a MS (Mobile Station), a UT (User Terminal), a SS (Subscriber Station), a wireless device, etc. in a GSM as well as a UE (User Equipment) in a WCDMA, a LTE, an HSPA, etc.

The BS 20 or a cell generally refers to a fixed station communicating with the UE 10, and may be referred to as other terms such as a Node-B, an eNB (evolved Node-B), a BTS (Base Transceiver System), an access point, a relay node, etc.

That is, in this specification, the BS 20 or the cell should be interpreted as a generic concept indicating some areas covered by a BSC (Base Station Controller) in a CDMA and a Node-B in a WCDMA, and is a concept including various coverage areas such as communication ranges of a mega cell, a macro cell, a micro cell, a pico cell, a femto cell, and a relay node.

The UE 10 and the BS 20 in this specification are used as a generic meaning, which are transmitting/receiving subjects used to implement a technology or a technological idea described in the present disclosure, and they are not limited by a specifically designated term or word.

A multiple access scheme applied to a wireless communication system has no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or an FDD (Frequency Division Duplex) scheme corresponding to a transmission using different frequencies may be used for an uplink transmission and a downlink transmission.

An embodiment of the present invention may be applied to resource allocations of an asynchronous wireless communication field evolving into an LTE (Long Term Evolution) and an LTE-advanced via a GSM, a WCDMA, and an HSPA, and a synchronous wireless communication field evolving into a CDMA, a CDMA-2000, and a UMB. The present invention should not be interpreted as a limited and restricted concept in a specific wireless communication field, but should be interpreted as a concept including all technical fields, to which ideas of the present invention can be applied.

A communication system to which embodiments of the present invention are applied can support uplink and/or downlink HARQ, and can use a CQI (Channel Quality Indicator) for a link adaptation. Further, multiple access methods for a downlink transmission and an uplink transmission may be different from each other, for example, the downlink may use an OFDMA (Orthogonal Frequency Division Multiple Access) and the uplink may use an SC-FDMA (Single Carrier-Frequency Division Multiple Access).

Layers of a radio interface protocol between a UE and a network may be divided into a first layer (L1), a second layer (L2), and a third layer (L3) based on three lower layers of an Open System Interconnection (OSI) model widely known in a communication system. A physical layer included in the first layer provides an information transfer service using a physical channel.

Meanwhile, in an example of the wireless communication system to which embodiments of the present invention are applied, one radio frame consists of 10 subframes and one subframe may include 2 slots.

A basic unit of a data transmission is a subframe unit, and an uplink or downlink scheduling is implemented in the unit of subframes. One slot may include a plurality of OFDM symbols on a time domain and at least one subcarrier on a frequency domain, and one slot may include 6 or 7 OFDM symbols.

For example, when a subframe consists of 2 time slots, each time slot may include 7 symbols in the time domain and 12 subcarriers in the frequency domain. The time-frequency domain defined by one slot can be referred to as a Resource Block (RB), but the time-frequency domain of the present invention is not limited thereto.

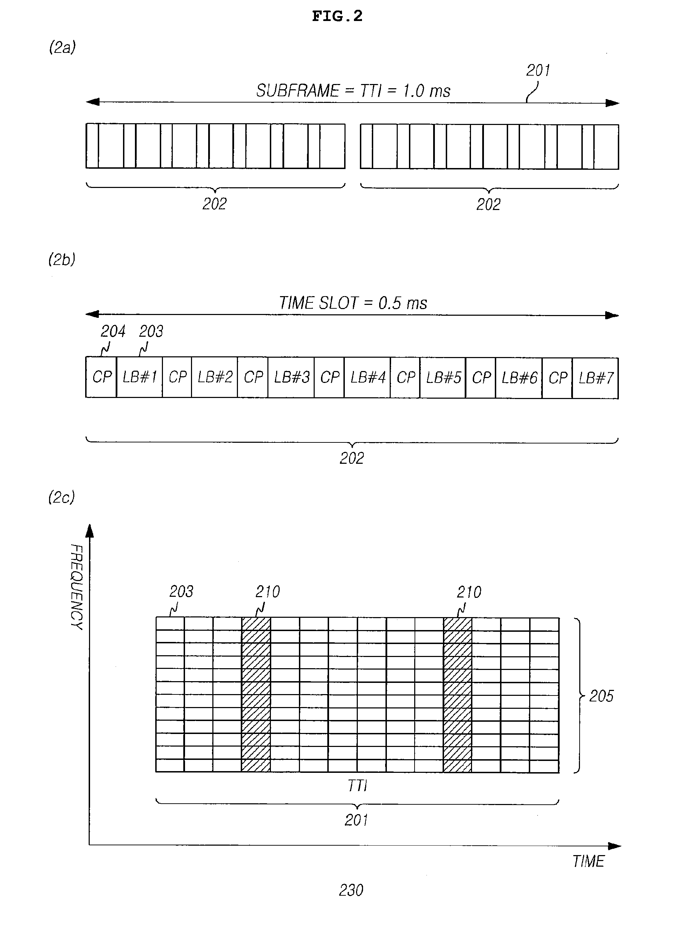

FIGs. 2A to 2C illustrate structures of a general subframe and time slot of transmission data which can be applied to embodiments of the present invention.

In 3GPP LTE, etc., a transmission time of a frame is divided into TTIs (Transmission Time Intervals) of 10 ms duration time. The terms "TTI" and "subframe" can be used as having the same meaning, and a frame is 10 ms long and includes 10 TTIs.

FIG. 2B illustrates a general structure of a time-slot according to embodiments of the present invention. As described above, the TTI is the basic transmission unit. One TTI includes 2 time-slots 202 having the same length and each time slot has a 0.5 ms duration time. The time-slot includes 7 Long Blocks (LBs) 203 for the symbol. Each LB is separated from others by a Cyclic Prefix (CP) 204. To sum it up, one TTI or subframe may include 14 LB symbols, but the present invention is not limited to the above structure of the frame, subframe, or time-slot.

FIG. 2C illustrates a construction of one resource block (RB) 230 during one subframe or TTI 201 according to embodiments of the present invention, and each TTI or subframe is divided into 14 LBs 203 on the time domain. Each LB can transport one symbol.

Further, an entire system bandwidth of 20 MHz is divided or split into subcarriers 205 of different frequencies. In an example of FIG. 2C, there are 12 consecutive subcarriers within one TTI. An area defined by 14 LBs on the time domain and 12 subcarriers on the frequency domain can be referred to as the RB.

For example, a bandwidth of 10 MHz within one TTI may include 50 RBs on the frequency domain.

Each box within the grid included in the RB can be referred to as a Resource Element (RE), and each subframe having the structure as described above may include 14x12=168 REs.

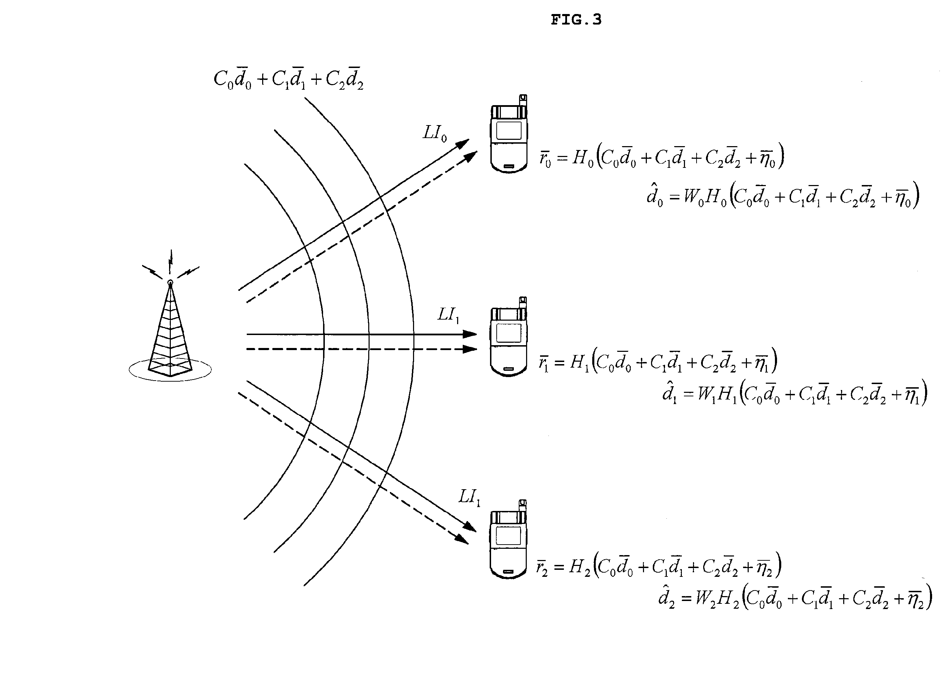

FIG. 3 illustrates an example of transmitting a signal in a Multiple User-Multiple Input Multiple Output (MU-MIMO) system where there are 3 UEs.

As shown in FIG. 3, the BS transmits data $\overline{d_0}$, $\overline{d_1}$, and $\overline{d_2}$ precoded using precoders $C_0$, $C_1$, and $C_2$, respectively to three UEs UE0, UE1, and UE2.

Further, since a signal is transmitted and received through a multiple antenna (MIMO), a transmission signal $\overline{d_i}$ and a reception signal $\overline{r_i}$ are expressed by vectors.

In FIG. 2, $H_i$ and $W_i$ are matrices corresponding to a propagation channel to a UE $i$ and a post-decoder used for a signal reconstruction in the UE $i$, respectively, and $\hat{d_i}$ denotes an estimated value or a post-decoded value of $\overline{d_i}$.

As shown in FIG. 3, since the post-decoder $W_i$ is determined by the precoder $C_i$, the UE $i$ can reconstruct information $\overline{d_i}$ only when the UE $i$ knows the precoder $C_i$ used by the BS for the Use $i$.

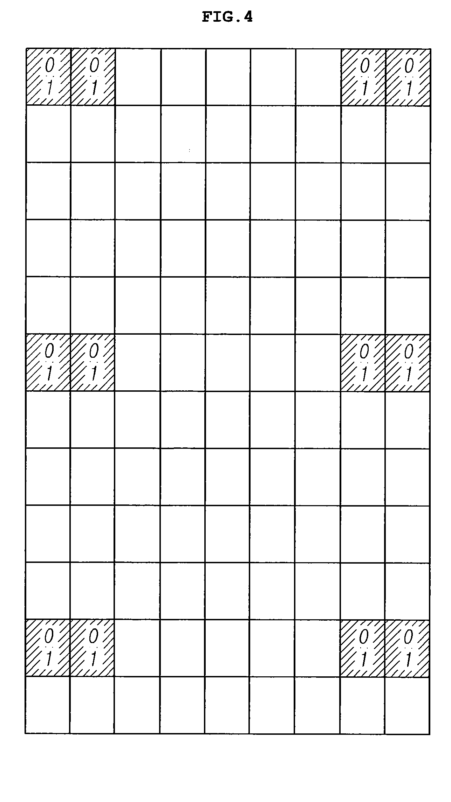

A DM-RS (Demodulation Reference Signal) is used to transmit information on the precoder $C_i$ used by the BS for the UE, and the DM-RS is transmitted through methods as shown in FIGs. 4 to 6.

Meanwhile, the MIMO antenna includes multiple layers, and the transmission may be limited to being a rank 1 transmission (the number of layers =1) to a rank 8 transmission (the number of layers =8) depending on the number of used layers.

In general, the layer refers to an independent information stream having different information, which is simultaneously transmitted, and the rank refers to the number of layers or the maximum number of layers, which can be simultaneously transmitted.

As described above, the transmitting apparatus is required to transmit information on a type of a precoder which used by the transmitting apparatus to the receiving apparatus. To this end, a reference signal called the DM-RS is used, and the DM-RS should be differently transferred to the receiving apparatus according to the layer.

Accordingly, it is required to distinguishably allocate the DM-RSs of respective layers to the RB having the aforementioned structure. That is, an RE of the RB, to which the DM-RS of each layer is to be allocated, should be designated, and this may be called DM-RS patterning or DM-RS mapping.

Meanwhile, a scheme may be discussed in which DM-RSs are allocated to a total of 12 REs in every RB in rank 1 and rank 2 transmissions where the number of layers is 2 or less, and the DM-RSs are allocated to a maximum of 24 REs in every RB in a rank 3 or more transmission where the number of layers is 3 or more.

FIGs. 4 to 6 illustrate embodiments of rank 2 to 4 transmissions in the DM-RS patterning as described above.

That is, FIGs. 4 to 6 show patterns of DM-RSs transmitted to a particular UE by the BS or transmitted to the BS by the particular UE, and there are 2 or 4 layers received or transmitted by the UE in FIGs. 4 to 6.

Each grid unit represents the RE into which the DM-RS is mapped, and an entire block represents a transport block which is the unit in which the DM-RS pattern is repeated.

Meanwhile, each range shown in FIGs. 4 to 6 is neither one transport block nor an entire RE, and only an area in which DM-RSs are expressed is illustrated.

The DM-RS pattern can be applied in an entire transmission bandwidth only once, and a predetermined pattern can be repeated on a frequency axis.

Each number shown in FIGs . 4 to 6 denotes a layer number, and an RE having the number corresponds to an RE to which a DM-RS of the corresponding number is allocated.

In FIGs. 4 to 6, an RE having two layer numbers is allocated DM-RSs of two layers, and the DM-RSs of the two layers are distinguished by an orthogonal code such as a Walsh code, a Hadamard code, etc., a semi-orthogonal code such as a Zedoff code, etc., or a random code ensuring a spreading gain. In the following embodiments, layers are distinguished by the Walsh code, but the layers can be distinguished by the aforementioned semi-orthogonal code, random code, or another orthogonal code.

FIG. 4 illustrates an example of the DM-RS mapping in a case of the rank 2 transmission, that is, a case where there are two layers. Both a layer 0 and a layer 1 are overlappingly allocated to each of twelve REs, and DM-RSs of respective layers are distinguished by the Walsh code.

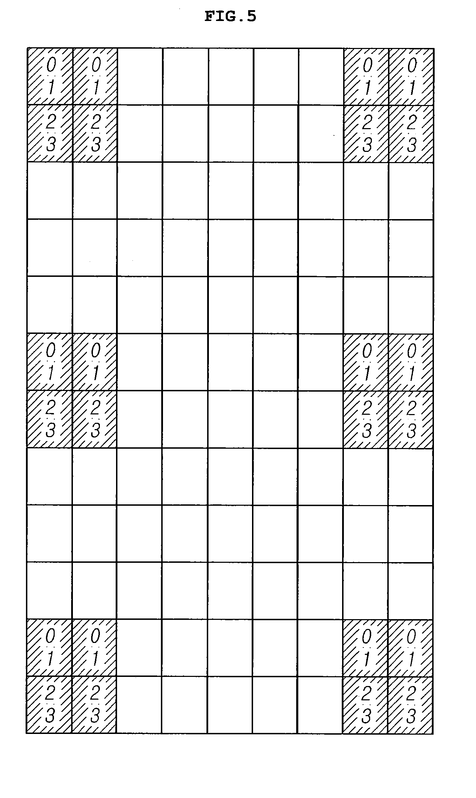

FIG. 5 illustrates an example of the DM-RS mapping in a case of the rank 4 transmission, that is, a case where there are four layers. DM-RSs of both layers 0 and 1 are overlappingly allocated to each of twelve REs, and DM-RSs of both layers 2 and 3 are allocated to each of twelve REs adjacent to the REs to which the layer 0/1 is allocated. The DM-RSs overlappingly allocated to each of the REs are distinguished by the Walsh code.

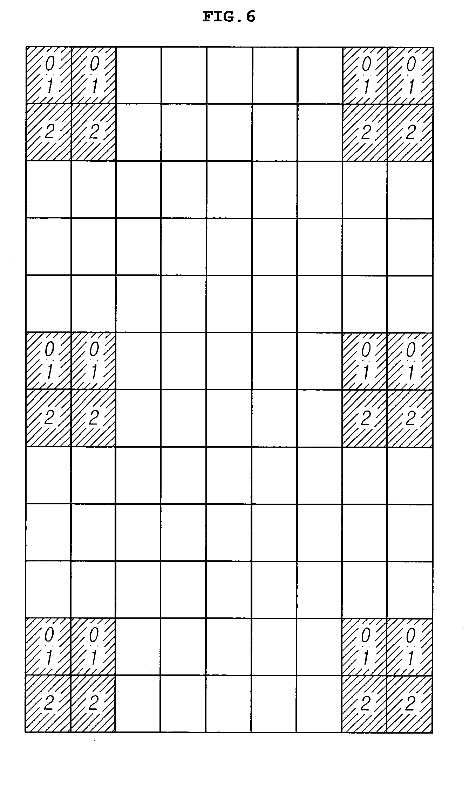

Meanwhile, FIG. 6 illustrates a case where the BS transmits three layers such as layers 0 to 2 to the UE or the UE transmits the three layers to the BS, that is, a case of the rank 3 transmission.

As shown in FIG. 6, in a case of the rank 3 transmission, the layers 0 and 1 are distinguished by the Walsh code and overlappingly allocated to each of twelve REs, but the layer 2 is singly allocated to each of twelve REs without overlapping with another layer and transmitted.

However, in a case of using the DM-RS mapping as shown in FIG. 6, DM-RSs for the layers 0 and 1 are transmitted in a code division manner such as the Walsh code, etc., so that the reliability may be deteriorated due to interference between the DM-RSs of the layers 0 and 1. On the other hand, the singly allocated/transmitted DM-RS for the layer 2 can be received with the higher reliability due to no interference with a DM-RS for another layer.

As describe above, when the reliability of the DM-RSs for the layers 0 and 1 is lower than the reliability of the DM-RS for the layer 2, a structure of the precoder may not be exactly grasped in the layers 0 and 1 in comparison with the layer 2, which causes the decoding performance of the reception side in the MIMO system to be deteriorated.

Accordingly, in order to overcome the above problem, it is necessary that all DM-RSs for respective layers have the same reliability.

That is, it is required that the layers 0 to 2 have the same reception reliability.

Embodiments of the present invention basically provide a method of mapping or transmitting DM-RSs for an odd number of layers. In the method, DM-RSs of respective layers are mapped into REs of one or more RBs and the mapped DM-RSs are transmitted so that the DM-RSs of respective layers have the same reception reliability.

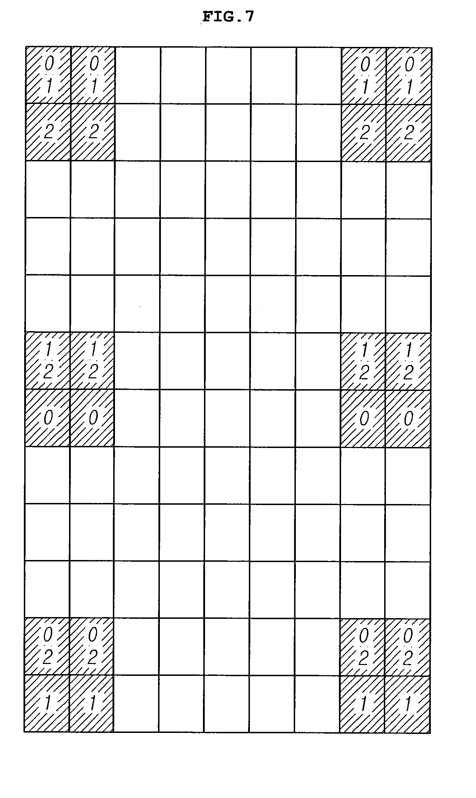

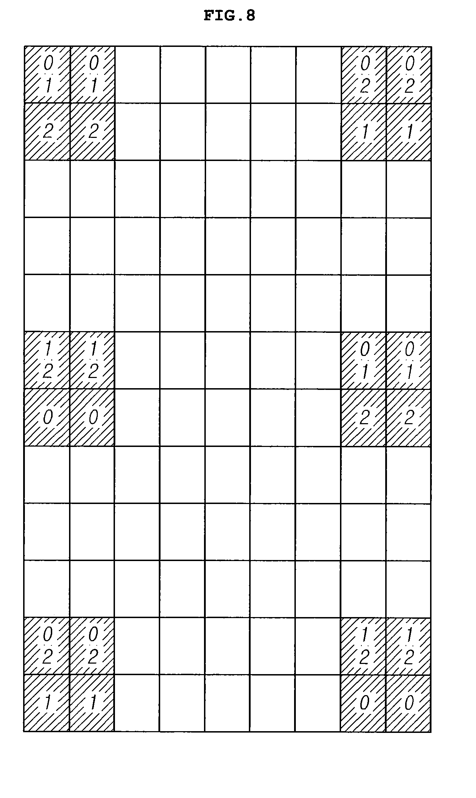

FIGs. 7 and 8 illustrate embodiments of the DM-RS mapping or the DM-RS patterning which allows DM-RSs for respective layers to have the same reception reliability in the rank 3 transmission.

As shown in the embodiments of FIG. 7 and 8, one RE group consisting of four REs includes a non-interference RE group in which DM-RSs for two layers are overlappingly allocated to each of two REs and a DM-RS for one remaining layer is singly allocated to each of two remaining REs one without any interference. The layer allocated without interference is alternately changed in every non-interference RE group.

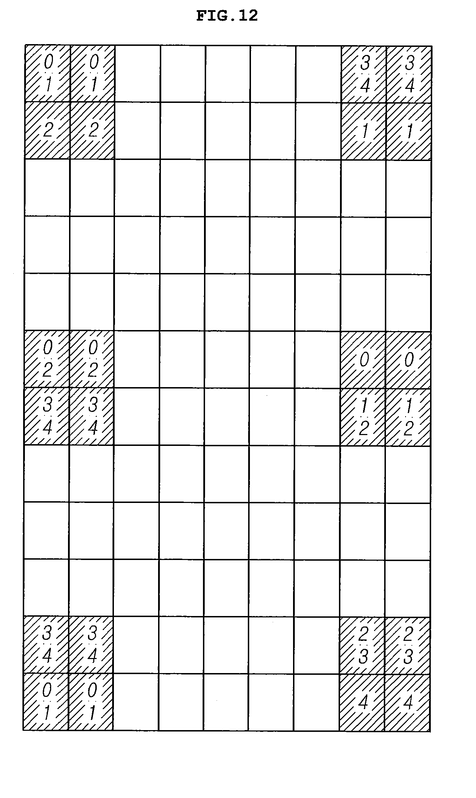

That is, in FIG. 7, 12 RE groups exist within one RB, each RE group including four REs, and all RE groups correspond to non-interference RE groups in which DM-RSs of two layers are overlappingly allocated to each of two REs and a DM-RS for one remaining layer is singly allocated to each of two remaining layers without interference. The layers allocated without interference are disposed alternately in every RE group.

That is, when a first RE group to a sixth RE group are defined in an order of left upper part→left lower part→right upper part→right lower part in FIG. 7, all RE groups correspond to non-interference RE groups and layers singly allocated based on the order of RE groups are disposed alternately in an order of 0→1→2→1→1→2.

According to FIG. 7, each RE group includes four REs adjacent to each other, but they do not have to be adjacent necessarily and two upper REs may be separated from two lower REs on the frequency domain.

FIG. 7 illustrates an embodiment in which the same DM-RS pattern is repeatedly patterned on the time domain, and FIG. 8 illustrates an example in which each RE group is differently mapped on the time-frequency domain.

In a case of FIG. 7, since each subcarrier (vertical axis) receives the same DM-RS on the entire time domain, a power control may be uniformly achieved. In a case of FIG. 8, since each subcarrier (vertical axis) receives a DM-RS variable on the time domain, a spatial diversity gain may be obtained. Of course, the DM-RS mapping on the time-frequency domain according to embodiments of the present invention can be applied over different resource blocks on the time domain according to the need of the BS or the UE in the same way as shown in embodiments of FIGs. 7 and 8 as well as being allocated over one resource block unit.

If respective DM-RSs for layers 0 to 2 are alternately transmitted without inter-layer interference, DM-RSs for respective layers are transmitted without interference with the DM-RS for another layer over four REs and transmitted such that they have interference with the DM-RSs for other layers over eigth REs.

While DM-RSs for layers 0 and 1 are transmitted to twelve REs such that they have inter-layer interference in a mapping type of FIG. 6, the DM-RSs of respective layers for all layers are transmitted to only eight REs such that they have interference with other layers, and the DM-RSs are transmitted to four REs without interference in embodiments of FIGs. 7 and 8. As a result, the reception reliability of DM-RSs can be improved if only the layers 0 and 1 are considered.

Further, since DM-RSs for layers 0 to 2 are transmitted to eight REs such that they have interference with other layers and transmitted to four remaining REs without interference equally, the DM-RSs for all transmission layers can have the same reception reliability.

Meanwhile, a scheme of transmitting the DM-RS for each layer to each RE without interference once or several times as shown in FIGs. 7 and 8 can be applied to various sized transport blocks and odd-numbered layer transmissions as well as the transport block and the 3-numbered transmission as described above.

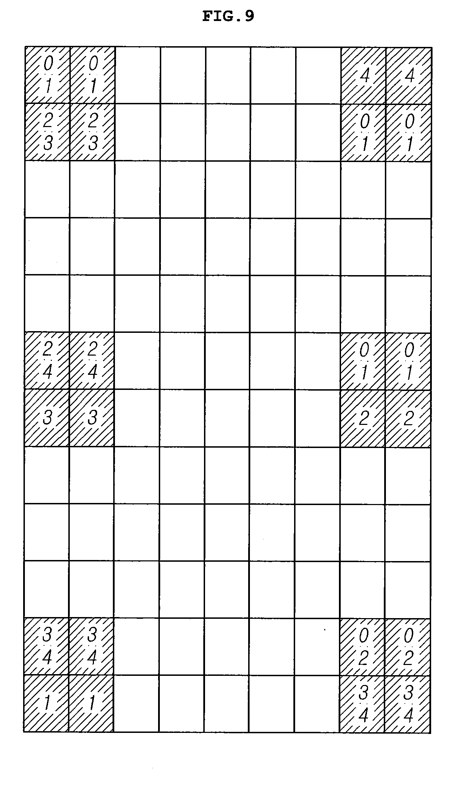

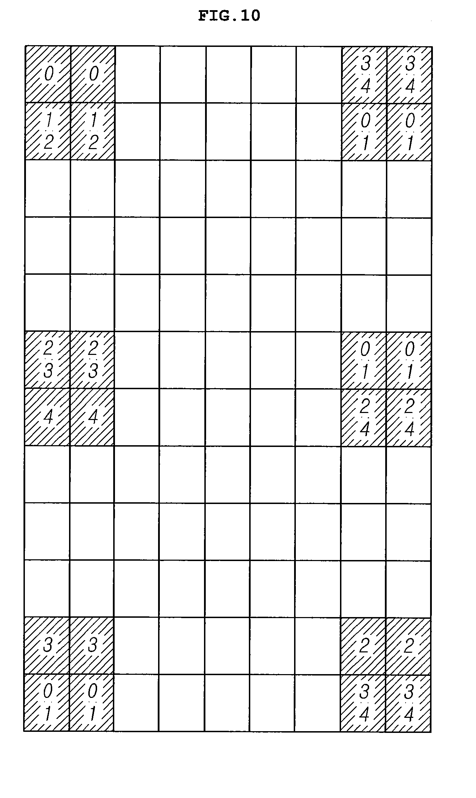

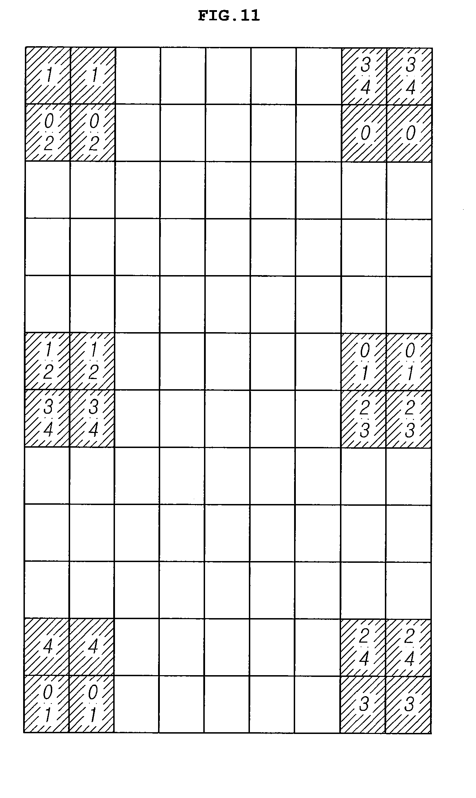

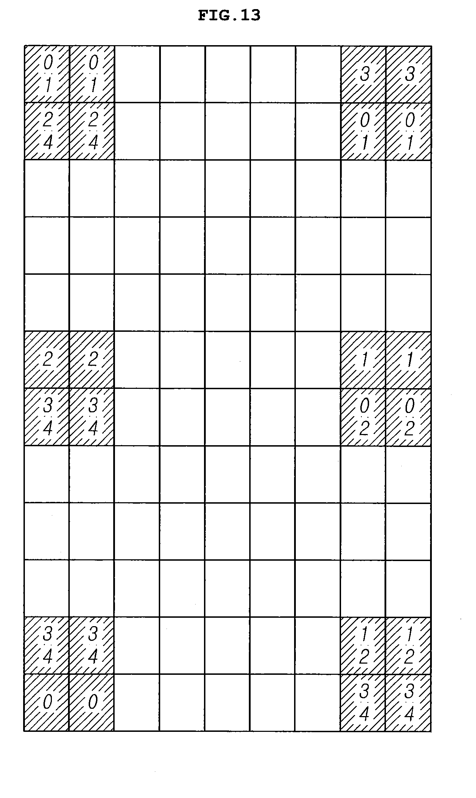

As one example, a case where there are five layers is described with reference to FIGs. 9 to 13.

FIGs. 9 to 13 illustrate embodiments of the DM-RS mapping or the DM-RS patterning which allows DM-RSs for respective layers to have the same reception reliability in the rank 5 transmission.

When there are five layers as shown in FIGs. 9 to 13, it is not possible to implement the DM-RS mapping for ensuring the uniform reliability in all layers with only one transport block or one RB as shown in FIGs. 4 to 6. In this case, the transport block should include a plurality of RBs.

As shown in FIGs. 9 to 13, in a case of the rank 5 transmission where there are five layers, DM-RSs should be mapped into a total of 5 RBs in the above described manner, each of the 5 RBs being as shown in FIGs . 9 to 13.

In embodiments of FIGs. 9 to 13, an RE group consisting of four adjacent REs is divided into an interference RE group including two pairs of two REs, each of the two REs being overlappingly allocated two layers with interference (for example, a left upper RE group of a first RB including two upper REs, each of the two upper REs being overlappingly allocated layers 0 and 1, and two lower REs, each of the two lower REs being overlappingly allocated layers 2 and 3), and a non-interference RE group including two REs, each of the two REs being overlappingly allocated two layers with interference, and two REs, each of the two REs are singly allocated one layer without interference with another layer (for example, a left lower RE group of the first RB including two upper REs, each of the two REs being overlappingly allocated layer 3 and 4, and two lower REs, each of the two lower REs being singly allocated the layer 1), wherein the layer allocated to the non-interference RE group is alternately changed.

That is, based on the RB order of left upper part→left lower part→right upper part→right lower part, an order of the singly allocated layers is 3→1→4→2→0→4→3→2. As a result, layers allocated without interference with another layer are alternately disposed.

In cases of FIGs. 9 to 13, 5 RBs (first RB to fifth RB) may be disposed on the frequency axis, on the time axis, or both the frequency and time axes.

In embodiments of FIGs. 7 to 13, the number of REs to which DM-RSs are transmitted without interference with another layer and the number of REs to which DM-RSs are transmitted with overlapping with another layer are determined as defined in the following formula.

For reference, in formulas used herein, $<a,b>$ is the least common multiple of a and b, $\lfloor a \rfloor$ is a maximum integer smaller than a, and $\lceil a \rceil$ is a minimum integer larger than a.

Further, "the number of times" such as once, twice, etc. can be used as having the same meaning as the number of corresponding RE groups.

First, in a case where the number of transmitted layers is $n_L$ and $n_L$ is an odd number, when two DM-RSs among DM-RSs for respective layers are transmitted to the same RE, the two DM-RSs being distinguished by the Walsh code, DM-RSs for $n_L$-1 layers among $n_L$ layers are transmitted with overlapping with DM-RSs for other layers within each of $\lceil n_L/2 \rceil \times 2$ REs, and only one layer is singly transmitted without overlapping with another layer. Accordingly, respective DM-RSs for all layers are transmitted without overlapping once within each of $\lceil n_L/2 \rceil \times n_L \times 2$ REs.

DM-RSs are transmitted within one RB by using 24 REs. When the calculated number of $\lceil n_L/2 \rceil \times n_L \times 2$ is not a divisor of 24, DM-RSs for respective layers cannot have the same reliability within one RB. In this case, DM-RSs for all layers can be mapped to have the same reliability within the number of RBs corresponding to a number calculated by formula (1). The mapping method is the same as a case where there are three layers. That is, DM-RSs for every two layers are mapped pair by pair, but DM-RSs for $n_L$ layers are mapped such that they are sequentially transmitted once without overlapping with DM-RSs of other layers.

$$\left(\left\lceil n_L/2 \right\rceil \times n_L \times 2, 24\right)/24 \qquad \cdots\cdots\cdots\cdots (1)$$

When DM-RSs are mapped and transmitted through the above method, DM-RSs for respective layers are transmitted without overlapping with other DM-RSs by the number of times defined in formula (2) in each of RBs corresponding to the number defined in formula (1), and transmitted without overlapping in the number of REs defined in formula (3).

$$\left(\left\lceil n_L/2 \right\rceil \times n_L \times 2, 24\right)/\left(\left\lceil n_L/2 \right\rceil \times n_L \times 2\right) \qquad \cdots\cdots\cdots (2)$$

$$\left(\left\lceil n_L/2 \right\rceil \times n_L \times 2, 24\right)/\left(\left\lceil n_L/2 \right\rceil \times n_L \times 2\right) \times 2 \qquad \cdots\cdots\cdots$$

$$(3)$$

As described above, since DM-RSs for respective layers are transmitted once in every $\lceil n_L/2 \rceil \times 2$ REs,

DM-RSs for respective layers are transmitted by the number of times defined in formula (4) in every $\langle\lceil n_L/2\rceil\times n_L\times 2,24\rangle/24$ RBs. Accordingly, the number of times by which the DM-RS for each layer is transmitted together with another layer is as defined in formula (5). That is, DM-RSs are transmitted together with DM-RSs of other layers in the number of REs corresponding to a multiple of formula (5).

$$\langle\lceil n_L/2\rceil\times n_L\times 2,24\rangle/\lceil n_L/2\rceil\times 2 \qquad \cdots\cdots\cdot (4)$$

$$\langle\lceil n_L/2\rceil\times n_L\times 2,24\rangle/(\lceil n_L/2\rceil\times 2)-\langle\lceil n_L/2\rceil\times n_L\times 2,24\rangle/(\lceil n_L/2\rceil\times n_L\times 2)$$

$$\cdots\cdots\cdots (5)$$

When the above formulas are applied to a case where the number of layers is 3 or 5 (i.e. the rank 3 transmission or the rank 5 transmission), if $n_L=3$, a DM-RS for one layer is transmitted without interference to $\lceil n_L/2\rceil\times 2 = 4$ REs, that is, in every four REs. If $n_L=5$, DM-RSs for one layer are transmitted without interference to $\lceil n_L/2\rceil\times 2 = 6$ REs, that is, in every six REs.

Accordingly, if $n_L= 3$, DM-RSs for all layers can be mapped with the same reliability in every twelve REs, and if $n_L= 5$, DM-RSs for all layers can be mapped with the same reliability in every 30 REs.

If $n_L=3$, DM-RSs of all layers can be mapped to have the same reliability within $\langle\lceil n_L/2\rceil\times n_L\times 2,24\rangle/24 = 1$ RE, that is, one RB as shown in FIGs. 7 and 8. If $n_L=5$, DM-RSs of all layers can be mapped to have the same reliability within $\langle\lceil n_L/2\rceil\times n_L\times 2,24\rangle/24 = 5$ REs, that is, five RBs as shown in FIGs. 8 to 13.

If $n_L=3$, DM-RSs of respective layers are transmitted without interference two times by formula (2) within one RB, that is, transmitted without interference through four REs. It is shown in FIGs. 7 and 8.

If $n_L=5$, DM-RSs of respective layers are transmitted without interference four times by the same formula within each of five RBs, that is, transmitted without interference through eight REs. It is shown in FIGs. 9 to 13.

If $n_L=3$, for one RB, DM-RSs for respective layers are transmitted together with DM-RSs of other layers in eight REs or by four times according to formula (5) en bloc. It is shown in FIGs. 7 and 8.

Based on the same formula, if $n_L=5$, for each of five RBs, DM-RSs for respective layers are transmitted together with DM-RSs of other layers through 32 REs or by 16 times, and it is shown in FIGs. 9 to 13.

As described above, the transmission method which allows DM-RSs for respective layers to be transmitted without interference with DM-RSs of other layers alternately once or several times in respective REs allocated for the DM-RS transmission can be applied to various sized RBs and a transmission of the odd number of layers as well as the aforementioned sized RB and a transmission of 3 or 5 layers.

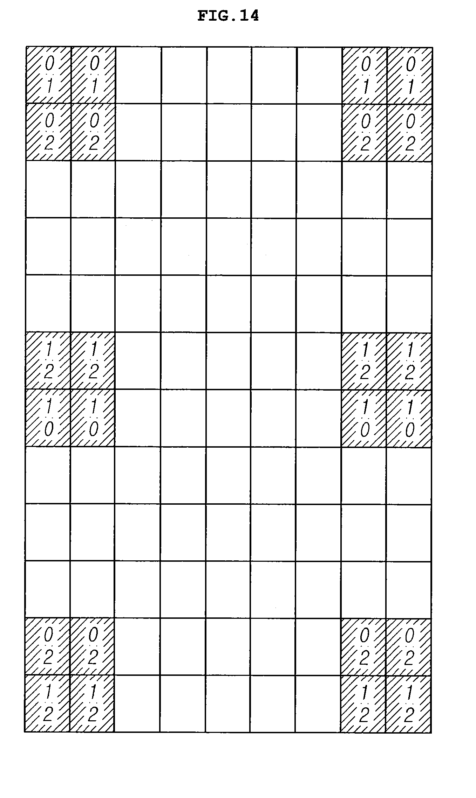

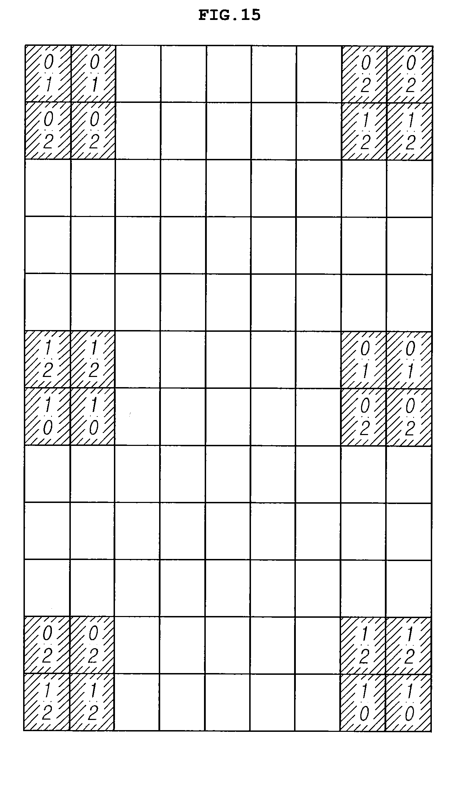

FIGs. 14 and 15 illustrate DM-RS mapping methods according to another embodiment of the present invention.

Although it has been described in FIGs. 7 to 13 that $n_L$ layers are singly transmitted alternately, it is possible that $n_L$ layers are sequentially mapped and transmitted to two or more DM-RS REs and it is shown in FIGs. 9 to 13.

In embodiments of FIGs. 14 and 15, in which RE groups include one or more overlapping RE groups in which a DM-RS of an equal layer is allocated to each of all four REs included in the RE group, each of the RE groups including four REs, each of the four REs being overlappingly allocated DM-RSs of two layers. The layer allocated to each of all four REs is alternately allocated in every overlapping RE group.

That is, DM-RSs of two layers are distinguished by the Walsh code and overlappingly transmitted to REs in all RE groups. When an RE group in which a DM-RS for the same layer are allocated to each of all four REs included in the RE group is defined as the "overlapping RE group", the layer allocated to each of all the four REs is sequentially changed in every overlapping RE group.

Referring to the drawings, as shown in FIGs. 14 and 15, when the RE group consisting of four adjacent REs allocated for the DM-RS is defined as one time, all twelve RE groups are the "overlapping RE groups".

In FIGs. 14 and 15, the overlapping RE groups are defined as a first RE group to a sixth RE group in an order of left upper part→left lower part→right upper part→right lower part, and a DM-RS of each layer is sequentially transmitted to all four REs within the group. Specifically, the DM-RS for the layer 0 is transmitted to all four REs in the first RE group (left upper part), the DM-RS for the layer 1 is transmitted to all four REs in the second RE group (left middle part), and the DM-RS for the layer 2 is transmitted to all four REs in the third RE group (left lower part).

Of course, DM-RSs of two remaining layers except for the DM-RS of the layer allocated to each of all four REs are overlappingly transmitted to each of two REs within each RE group.

According to the embodiment, when the RE group is defined as one time, the DM-RS of each layer is transmitted to all four REs by the number of times defined in formula (2), and the number of times by which DM-RSs are transmitted through two REs within the RE group is as defined in equation (5).

As shown in FIGs. 14 and 15, when a case of the rank 3 transmission is applied to the formula, if $n_L=3$ , the DM-RS for each layer is transmitted to all 4 REs within one RB two times based on formula (2).

Further, DM-RSs for respective layers are transmitted through two REs within one RE group four times based on formula (5).

That is, in a case of the layer 2, the DM-RS for the layer 0 is transmitted to all four REs two times (first RE group and fourth RE group) as shown in FIGS. 14 and 15, and transmitted to only two REs together with the DM-RS of another layer four times (remaining RE groups).

As a result, if $n_L=3$, the DM-RS of each layer is uniformly transmitted to 16 REs together with DM-RSs of other layers and thus it is possible to secure the same reliability.

In embodiments of FIGs. 14 and 15, the total number of REs to which DM-RSs are transmitted together with DM-RSs of other layers is expressed as defined in formula (6).

$$\texttt{(formula 2)} \mathbf{x} 4 + \texttt{(formula 5)} \mathbf{x} 2 \qquad \dots\dots\dots\dots\dots\dots\dots \quad \texttt{(6)}$$

Although this specification has used the terms "RE group", "(non) interference RE group", and "overlapping RE group", they may be replaced with other terms as long as their definitions are maintained.

The aforementioned DM-RS mapping method or patterning method can be applied to all transmitting apparatuses for informing the receiving apparatus of information on the precoder. Further, the method is mainly applied to the BS corresponding to the transmitting apparatus in a downlink, but may be applied to the UE corresponding to the transmitting apparatus in an uplink according to cases.

That is, according to an embodiment, the communication terminal apparatus can be implemented in a type of UE for receiving DM-RSs for an odd number of layers generated by mapping DM-RSs for respective layers into REs of one or more RBs in order to make the reception reliability for the DM-RSs of respective layers the same, and acquiring information on the precoder used in each layer.

Through the aforementioned embodiments, a problem of being unable to exactly measure the precoder due to the low reliability of DM-RSs of some layers can be solved by standardizing the reception reliability of DM-RSs for respective layers. Accordingly, an effect of improving the reception performance of the MIMO system is achieved.

Even if it was described above that all of the components of an embodiment of the present invention are coupled as a single unit or coupled to be operated as a single unit, the present invention is not necessarily limited to such an embodiment. That is, among the components, one or more components may be selectively coupled to be operated as one or more units. In addition, although each of the components may be implemented as an independent hardware, some or all of the components may be selectively combined with each other, so that they can be implemented as a computer program having one or more program modules for executing some or all of the functions combined in one or more hardwares. Codes and code segments forming the computer program can be easily conceived by an ordinarily skilled person in the technical field of the present invention. Such a computer program may implement the embodiments of the present invention by being stored in a computer readable storage medium, and being read and executed by a computer. A magnetic recording medium, an optical recording medium, a carrier wave medium, or the like may be employed as the storage medium.

In addition, since terms, such as "including," "comprising," and "having" mean that one or more corresponding components may exist unless they are specifically described to the contrary, it shall be construed that one or more other components can be included. All of the terminologies containing one or more technical or scientific terminologies have the same meanings that persons skilled in the art understand ordinarily unless they are not defined otherwise. A term ordinarily used like that defined by a dictionary shall be construed that it has a meaning equal to that in the context of a related description, and shall not be construed in an ideal or excessively formal meaning unless it is clearly defined in the present specification.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

CROSS-REFERENCE TO RELATED APPLICATION

This application claims priority from and the benefit under 35 U.S.C. §119(a) of Korean Patent Application No. 10-2009-0105184 filed on November 2, 2009, which is hereby incorporated by reference for all purposes as if fully set forth herein.

**Claims**

1. A method of mapping a Demodulation Reference Signal (DM-RS), the method comprising:

   alternately allocating singly allocated layers in every non-interference RE group,
   wherein one RE group including four Resource Elements (REs) comprises a non-interference RE group in which DM-RSs of two layers are overlappingly allocated to each of two REs and a DM-RS of one remaining layer is singly allocated to each of two remaining REs.

2. The method as claimed in claim 1, wherein the DM-RSs transmitted through each of the two REs to which the DM-RSs are overlappingly allocated are distinguished by a Walsh code.

3. The method as claimed in claim 1, wherein, when a number of transmitted layers is $n_L$, DM-RSs are mapped into Resource Blocks (RBs) corresponding to a number defined in the following formula of

$$\left(\lceil n_L/2 \rceil \times n_L \times 2,24\right)/24 \; .$$

4. The method as claimed in claim 3, wherein a number of non-interference RE groups in which DM-RSs for respective layers are singly allocated without interference or a number of transmission times is defined by the following formula of

$$\left(\lceil n_L/2 \rceil \times n_L \times 2,24\right)/\left(\lceil n_L/2 \rceil \times n_L \times 2\right) \; .$$

5. The method as claimed in claim 4, wherein a number of RE groups in which DM-RSs for respective layers are allocated together with DM-RSs of other layers or a number of transmissions is defined by the following formula of

$$\left(\left\lceil n_L/2\right\rceil \times n_L \times 2,24\right)/\left(\left\lceil n_L/2\right\rceil \times 2\right) - \left(\left\lceil n_L/2\right\rceil \times n_L \times 2,24\right)/\left(\left\lceil n_L/2\right\rceil \times n_L \times 2\right).$$

**6.** A method of mapping a Demodulation Reference Signal (DM-RS), the method comprising:

alternately allocating layers allocated to all four REs in every overlapping RE group,
wherein RE groups include one or more overlapping RE groups in which a DM-RS of an equal layer is allocated to each of all four REs included in the RE group, each of the RE groups including four REs, each of the four REs being overlappingly allocated DM-RSs of two layers.

**7.** The method as claimed in claim 6, wherein, when a number of transmitted layers is $n_L$, DM-RSs are mapped into Resource Blocks (RBs) corresponding to a number defined in the following formula of

$$\left(\left\lceil n_L/2\right\rceil \times n_L \times 2,24\right)/24 \ .$$

**8.** The method as claimed in claim 7, wherein a number of overlapping RE groups in which the DM-RS of the equal layer is allocated to each of all four REs or a number of transmissions is defined by the following formula of

$$\left(\left\lceil n_L/2\right\rceil \times n_L \times 2,24\right)/\left(\left\lceil n_L/2\right\rceil \times n_L \times 2\right).$$

**9.** A method of transmitting DM-RSs for an odd number of layers, the method comprising:

mapping DM-RSs of respective layers into REs of one or more RBs and then transmitting the mapped DM-RSs so that the DM-RSs of the respective layers have equal reception reliability.

**10.** A communication terminal apparatus for receiving DM-RSs for an odd number of layers, the communication terminal apparatus receiving DM-RSs of an odd number of layers generated by mapping a DM-RS of each layer into REs of one or more RBs in order to allow DM-RSs of respective layers to have equal reception reliability and acquiring information on precoders used in the respective layers.

**11.** An apparatus for transmitting DM-RSs for an odd number of layers, the apparatus mapping DM-RSs for respective layers into REs of one or more RBs and then transmitting the mapped DM-RSs so that the DM-RSs of the respective layers have equal reception reliability.

**12.** A method of receiving DM-RSs of an odd number of layers by a communication terminal apparatus, the method comprising:

receiving DM-RSs of an odd number of layers generated by mapping DM-RSs of respective layers into REs of one or more RBs so that the DM-RSs of the respective layers have equal reception reliability, by the communication terminal apparatus; and
acquiring information on precoders used in the respective layers.

FIG.1

**FIG.2**

*(2a)*

*201*

SUBFRAME = TTI = 1.0 ms

*202*          *202*

*(2b)*

TIME SLOT = 0.5 ms

*204*  *203*

| CP | LB#1 | CP | LB#2 | CP | LB#3 | CP | LB#4 | CP | LB#5 | CP | LB#6 | CP | LB#7 |

*202*

*(2c)*

FREQUENCY

*203*    *210*        *210*

*205*

TTI

*201*

TIME

*230*

FIG.3

$$C_0\overline{d}_0 + C_1\overline{d}_1 + C_2\overline{d}_2$$

$LI_0$

$$\overline{r}_0 = H_0\left(C_0\overline{d}_0 + C_1\overline{d}_1 + C_2\overline{d}_2 + \overline{\eta}_0\right)$$

$$\hat{d}_0 = W_0 H_0\left(C_0\overline{d}_0 + C_1\overline{d}_1 + C_2\overline{d}_2 + \overline{\eta}_0\right)$$

$LI_1$

$$\overline{r}_1 = H_1\left(C_0\overline{d}_0 + C_1\overline{d}_1 + C_2\overline{d}_2 + \overline{\eta}_1\right)$$

$$\hat{d}_1 = W_1 H_1\left(C_0\overline{d}_0 + C_1\overline{d}_1 + C_2\overline{d}_2 + \overline{\eta}_1\right)$$

$LI_1$

$$\overline{r}_2 = H_2\left(C_0\overline{d}_0 + C_1\overline{d}_1 + C_2\overline{d}_2 + \overline{\eta}_2\right)$$

$$\hat{d}_2 = W_2 H_2\left(C_0\overline{d}_0 + C_1\overline{d}_1 + C_2\overline{d}_2 + \overline{\eta}_2\right)$$

EP 2 498 465 A2

FIG.4

FIG.5

FIG. 6

FIG.7

FIG.8

FIG. 9

FIG.10

FIG.11

FIG.12

FIG.13

FIG.14

## FIG.15

**REFERENCES CITED IN THE DESCRIPTION**

**Patent documents cited in the description**

• KR 1020090105184